# EUROPÄISCHE PATENTSCHRIFT

(11) **EP 2 221 496 B1**
(45) Veröffentlichungstag und Bekanntmachung des Hinweises auf die Patenterteilung: **15.05.2013**
(21) Anmeldenummer: 10153339.6
(22) Anmeldetag: 11.02.2010
(51) Int. Cl.: F16D 27/112, F16D 25/08

(54) **Trennvorrichtung für eine reibungskupplung**
Separator device for a friction clutch
Dispositif de séparation pour un embrayage à friction

(30) Priorität: 19.02.2009 US 153768 P
(43) Veröffentlichungstag der Anmeldung: 25.08.2010
(73) Patentinhaber: Schaeffler Technologies AG & Co. KG, 91074 Herzogenaurach (DE)
(72) Erfinder: George, Philip, Wooster, OH 44691 (US); Jayaram, Mavinkal, Broadview Heights, OH 44147 (US)

(56) Entgegenhaltungen:
- EP-A1- 2 110 530
- EP-A1- 2 138 734
- EP-A2- 1 659 307
- WO-A1-2009/136255
- DE-A1- 10 013 252
- US-A1- 2008 184 945

## Beschreibung

### Gebiet der Erfindung

Die Erfindung bezieht sich auf Brennkraftmaschinen, welche sich besonders für Kraftfahrzeuge eignen und sie bezieht sich insbesondere auf eine Kupplung aufweisende Wasserpumpen, um eine Deaktivierung der Kupplung zu ermöglichen, so dass das Flügelrad beim Anlassen der Brennkraftmaschine und bei kaltem Wetter Kühlflüssigkeiten nicht umwälzt.

### Hintergrund der Erfindung

Bekannte Wasserpumpen für Brennkraftmaschinen wie sie aus der EP 1 659 307 A2 bekannt sind, werden durch einen mit einer Riemenscheibe einer Wasserpumpe zusammenwirkenden Riemen angetrieben. Die Riemenscheibe ist derart dauerhaft mit der Welle der Pumpe verbunden, dass das Flügelrad der Pumpe stets in Betrieb ist und ständig Wasser umwälzt. Um die Aufwärmzeit der Brennkraftmaschine zu verkürzen, wurde vorgeschlagen, die Pumpe mit einer Kupplung zu versehen, um die Riemenscheibe von der Welle zu lösen.

### Aufgabe der Erfindung

Der Erfindung liegt die Aufgabe zu Grunde, eine einfache Kupplungsvorrichtung für den Einsatz in einer Wasserpumpe einer Brennkraftmaschine zu schaffen, welche ein Lösen der Riemenscheibe von der Welle für kurze Zeiträume ermöglicht.

Diese Aufgabe wird durch Hinzuziehen der nachstehenden Beschreibung der Erfindung leicht zu verstehen sein.

### Zusammenfassung der Erfindung

Dies Aufgabe wird erfindungsgemäß durch die Verwendung einer Reibflächen aufweisenden Kupplung gelöst, wobei diese Reibflächen sich in radialer Richtung erstrecken, und weiterhin durch die Verwendung einer Betätigungsvorrichtung, welche, im gekoppelten Zustand die Reibflächen außer Eingriff bringt, wodurch die Riemenscheibe von der Welle gelöst wird.

Ganz allgemein gesehen kann die Erfindung als eine Wasserpumpe mit einer Kupplung für eine Brennkraftmaschine definiert werden, bestehend aus: einem Pumpengehäuse mit einer darin angeordneten Pumpenwelle; einer am Pumpengehäuse drehbar gelagerten Riemenscheibe, wobei die Riemenscheibe eine radiale Eingriffsfläche für die Kupplung aufweist; einer mit einer Feder versehenen Kupplung, einer Antriebsscheibe und einer beweglichen Druckplatte, welche radial um die Pumpenwelle gelagert und axial zwischen der Kupplungseingriffsfläche und der Druckplatte angeordnet ist, wobei die Druckplatte radial um die Pumpenwelle und axial benachbart zur Antriebsscheibe gelagert ist, und wobei die Feder radial um die Pumpenwelle angeordnet ist und die Druckplatte, die Antriebsscheibe und die Kupplungseingriffsfläche in Richtung eines Reibschlusses miteinander vorspannt; und weiterhin bestehend aus einer Betätigungsvorrichtung, um die Druckplatte außer Eingriff mit der Antriebsscheibe zu bringen und somit die Riemenscheibe von der Pumpenwelle zu trennen. Die Betätigungsvorrichtung ist ein elektromagnetischer, eine Spule und einen beweglichen Tauchkolben aufweisender Aktuator. Bei einer Bestromung der Spule, kann der Tauchkolben in Eingriff mit der Druckplatte kommen, um die Druckplatte außer Eingriff mit der Antriebscheibe zu bewegen.

Die erfindungsgemäße Betätigungsvorrichtung wird an dem folgenden Ausführungsbeispiel beschrieben.

Zum besseren Verständnis wird die vorliegende Erfindung jetzt mit Bezugnahme auf eine oder mehrere der beigefügten Zeichnungen beschrieben.

### Kurze Beschreibung der Zeichnungen

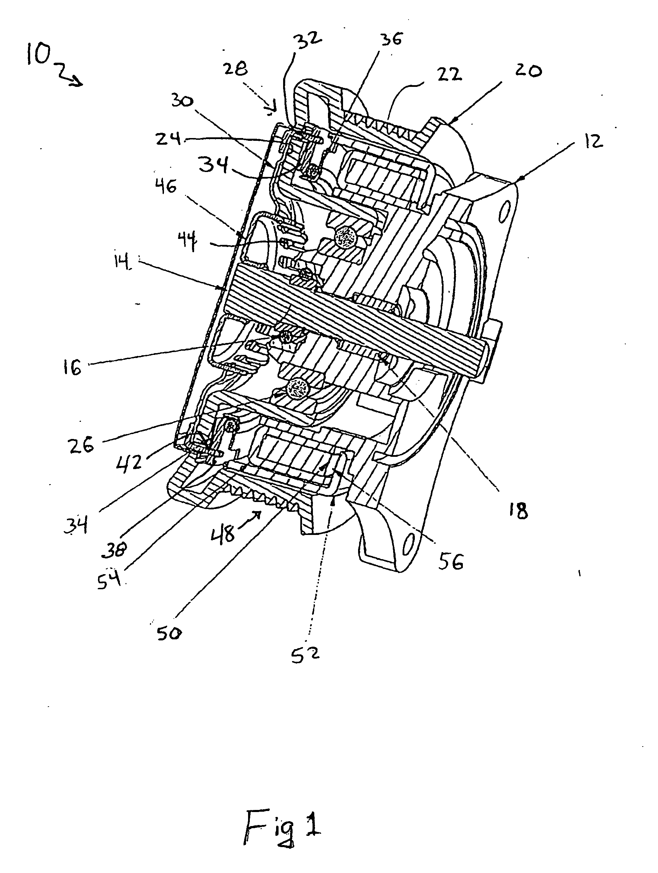

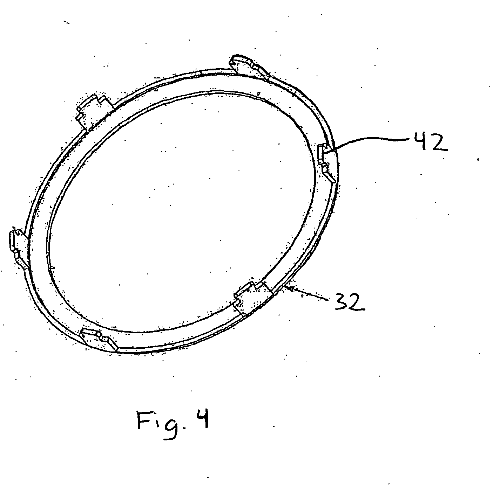

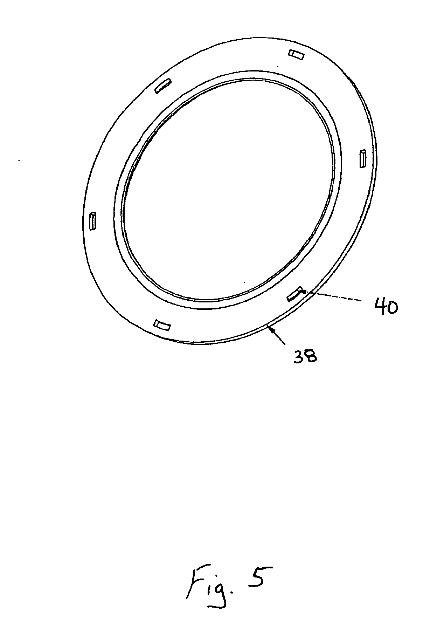

Die Figuren 1 bis 5 enthalten Darstellungen einer eine erfindungsgemäße Kupplung aufweisenden Wasserpumpe, welche mit einer Betätigungsvorrichtung in Form eines elektromagnetischen Aktuators versehen ist;

### Ausführliche Beschreibung der Zeichnungen

In Figur 1 ist eine Wasserpumpe 10 mit einer Kupplung 28 dargestellt, wobei die Wasserpumpe ein Pumpengehäuse 12 und eine sich durch das Pumpengehäuse 12 erstreckende und mit einem Flügelrad (nicht gezeigt) verbundene Pumpenwelle 14 mit zwei Pumpenwellenlagern 16 und 18 aufweist. Das Pumpengehäuse 12 ist auf bekannte Weise im Motorraum eines Fahrzeugs befestigt.

An der Außenseite des Pumpengehäuses 12 ist eine Riemenscheibe 20 drehbar befestigt. Die Riemenscheibe 20 weist eine Riemeneingriffsfläche 22 für einen Eingriff mit einem Riemen für die rotierende Riemenscheibe 20 und eine Kupplungseingrifffläche 24 für einen Eingriff mit der Kupplung 28 auf, wodurch die Riemenscheibe 20 mit der Welle 14 verbunden ist. Bei einer Trennung der Riemenscheibe 20 von der Welle 14 dreht sich die Riemenscheibe 20 frei auf einem Riemenscheibenlager 26.

Die Kupplung 28 besitzt eine Antriebsscheibe 30 und eine Druckplatte 32, wobei diese beiden Teile in radialer Richtung orientiert und voneinander axial beabstandet im Pumpengehäuse 12 angeordnet sind. Die Antriebsscheibe 30 ist zwischen der Druckplatte 32 und der Kupplungseingrifffläche 24 eingesetzt.

Ein Lagerring 38 eines Kupplungstrennungslager 36 wird durch eine Tellerfeder 34 druckbeaufschlagt, um sicherzustellen, dass die Druckplatte 32 Druck auf die Antriebscheibe 30 ausübt. Dieser Druck stellt wiederum sicher, dass die Antriebsscheibe 30, die Druckplatte 32 und die Kupplungseingrifffläche 24 nun miteinander reibschlüssig verbunden sind. Im Lagerring 38 vorgesehene Schlitze 40 dienen dazu, axiale Zähne 42 der Druckplatte 32 mit dem Lagerring 38 zu verbinden. Radiale Zähne 44 der Antriebsscheibe 30 verbinden die Antriebsscheibe 30 mit einer Keilnutenscheibe 46, welche an der Pumpenwelle 14 befestigt ist.

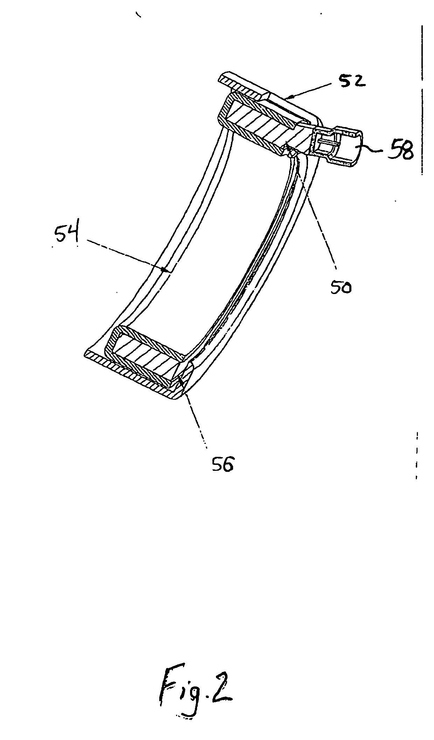

Ein Aktuator 48 weist eine innerhalb eines Kerns 54 angeordnete Spule 50 auf. Durch Aktivierung der Spule 50 wird ein beweglicher Tauchkolben 52 verschoben. Die Verschiebungsstrecke des Tauchkolbens 52 ist durch einen Luftspalt 56 dargestellt. Mit Hilfe einer Buchse 58, siehe Figur 2, wird die Spule 50 innerhalb des Kerns 54 bestromt. Der Aktuator 48 ist im Pumpengehäuse 12 durch eine Presspassung des Kerns 54 auf komplementäre Flächen des Pumpengehäuses 12 befestigt. Bei einer Bestromung der Spule 50 bewegt sich der Tauchkolben 52 in axialer Richtung und schließt den Luftspalt 56.

Unter normalen Betriebsbedingungen ist die Spule 50 gelöst. Der Luftspalt 56 hat dann seine größte Ausdehnung und die Tellerfeder 34 schiebt das Kupplungstrennungslager 36 (ein Axiallager) rechts in axialer Richtung. Da die Druckplatte 32 starr mit dem Lagerring 38 verbunden ist, wird die Kraft der Tellerfeder 34 auf die Druckplatte 32 übertragen. Hierdurch wird sichergestellt, dass die Antriebsscheibe 30 fest zwischen der Druckplatte 32 und der Kupplungseingrifffläche 24 der Riemenscheibe 20 durch Reibung gehalten wird.

Wenn die Riemenscheibe 20 sich dreht, wird diese Drehbewegung auf die Antriebsscheibe 30 übertragen, die mit Keilnuten versehen ist, um mit Hilfe ihrer radialen Zähne 44 mit der Keilnutenscheibe 46 zusammenzuwirken.

Die Keilnutenscheibe 46 ist starr mit der Pumpenwelle 14 verbunden, so dass die Drehbewegung der Riemenscheibe 20 auf die Pumpenwelle 14 übertragen wird.

Bei einer Bestromung der Spule 50 verschiebt sich der Tauchkolben 52 in axialer Richtung, um den Luftspalt 56 zu schließen. Dies hat zur Folge, dass das Kupplungstrennungslager 36 in eine Richtung bewegt wird, die zu einem Zusammendrücken der Tellerfeder 34 führt. Dies wiederum hat zur Folge, dass die Druckplatte 32 sich von der Fläche der Antriebsscheibe 30 hebt und so die Antriebsscheibe 30 befreit. Durch die Lösung der Antriebsscheibe 30 wird der Reibschluss zwischen der Antriebsscheibe 30 und der Kupplungseingrifffläche 24 gelockert, so dass beide Flächen sich frei und unabhängig voneinander drehen können. Folglich verliert die Riemenscheibe 20 Kontakt mit der Antriebsscheibe 30, so dass die Drehbewegung der Riemenscheibe 20 nicht mehr auf die Antriebsscheibe 30 übertragen wird. Dies wiederum beendet die Drehbewegung der Pumpenwelle 14.

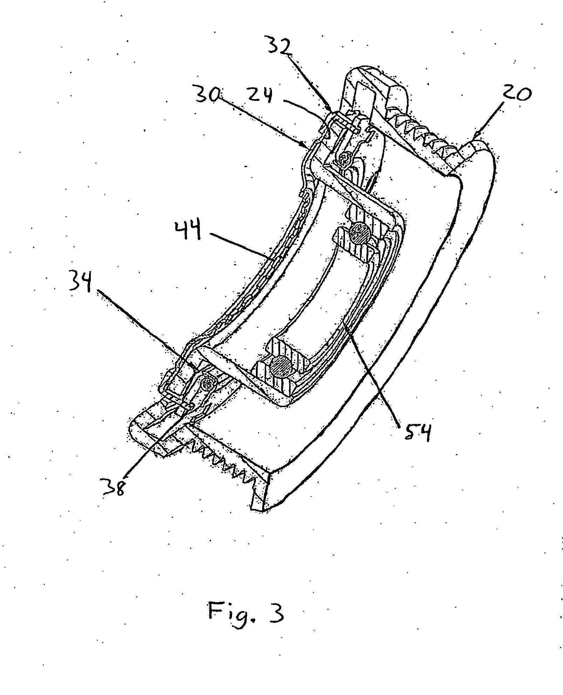

Wie in Figur 3 dargestellt, ist die Antriebsscheibe 30 zwischen der Druckplatte 32 und einer Kupplungseingrifffläche 24 der Riemenscheibe 20 zwischengelagert. Die radialen Zähne 44 der Antriebsscheibe 30, siehe Figur 1, stellen einen Eingriff zwischen der Antriebsscheibe 30 und einer Keilnutenscheibe 46 sicher.

In Figur 4 sind die Druckplatte 32 und ihre radialen Zähne 44 dargestellt.

In Figur 5 ist ein Lagerring 38 mit Schlitzen 40 dargestellt.

### Bezugszahlen

| | |
|---|---|
| 10 | Wasserpumpe mit Kupplung |
| 12 | Pumpengehäuse |
| 14 | Pumpenwelle |
| 16 | Pumpenwellenlager |
| 18 | Pumpenwellenlager |
| 20 | Riemenscheibe |
| 22 | Riemeneingriffsfläche |
| 24 | Kupplungseingrifffläche |
| 26 | Riemenscheibenlager |
| 28 | Kupplung |
| 30 | Antriebsscheibe |
| 32 | Druckplatte |
| 34 | Tellerfeder |
| 36 | Kupplungstrennungslager (Axiallager) |
| 38 | Lagerring |
| 40 | Schlitze |
| 42 | Axiale Zähne der Druckplatte |
| 44 | Radiale Zähne der Antriebsscheibe |
| 46 | Keilnutenscheibe |
| 48 | Aktuator |
| 50 | Spule |
| 52 | Tauchkolben |
| 54 | Kern |
| 56 | Luftspalt |
| 58 | Buchse |

## Patentansprüche

1. Wasserpumpe mit einer Kupplung für eine Brennkraftmaschine mit:
- einem Pumpengehäuse (12) mit einer darin angeordneten Pumpenwelle (14);
- einer auf dem Pumpengehäuse (12) drehbar montierten Riemenscheibe (20), welche eine radiale Kupplungseingriffsfläche (24) aufweist;
- einer mit einer Feder (34) versehenen Kupplung (28), einer Antriebsscheibe (30) und einer beweglichen Druckplatte (32), wobei die Antriebsscheibe (30) radial um die Pumpenwelle (14) montiert und axial zwischen der Kupplungseingriffsfläche (24) und der Druckplatte (32) angeordnet ist, wobei die Druckplatte (32) radial um die Pumpenwelle (14) montiert und axial benachbart zur Antriebsscheibe (30) positioniert ist, wobei die Feder (34, 84, 146) radial um die Pumpenwelle (14) angeordnet ist und die Druckplatte (32), die Antriebsscheibe (30, 80, 140, 142) und die Kupplungseingriffsfläche (24) in einen Reibschluss miteinander vorspannt;
- mit einer Betätigungsvorrichtung (48) zum Bewegen der Druckplatte (32) außer Eingriff mit der Antriebsscheibe (30) und zum Lösen der Riemenscheibe (20) von der Pumpenwelle (14), wobei die Betätigungsvorrichtung ein elektromagnetischer Aktuator (48) ist, welcher eine Spule (50) aufweist,
- **dadurch gekennzeichnet, dass** der elektromagnetische Aktuator (48) einen beweglichen Tauchkolben (52) aufweist, und dass bei einer Bestromung der Spule (50) der Tauchkolben (52) derart in Eingriff mit der Druckplatte (32) gebracht werden kann, dass er die Druckplatte (32) außer Eingriff mit der Antriebsscheibe (30) bewegt.

## Claims

1. Water pump having a clutch for an internal combustion engine with:
- a pump housing (12) having a pump shaft (14) which is arranged therein;
- a belt pulley (20) which is mounted rotatably on the pump housing (12) and has a radial clutch engagement face (24);
- a clutch (28) which is provided with a spring (34), a drive disc (30) and a movable pressure plate (32), the drive disc (30) being mounted radially around the pump shaft (14) and being arranged axially between the clutch engagement face (24) and the pressure plate (32), the pressure plate (32) being mounted radially around the pump shaft (14) and being positioned axially adjacently to the drive disc (30), the spring (34, 84, 146) being arranged radially around the pump shaft (14) and prestressing the pressure plate (32), the drive disc (30, 80, 140, 142) and the clutch engagement face (24) into a frictional connection with one another;
- having an actuating apparatus (48) for moving the pressure plate (32) out of engagement with the drive disc (30) and for releasing the belt pulley (20) from the pump shaft (14), the actuating apparatus being an electromagnetic actuator (48) which has a coil (50),
- **characterized in that** the electromagnetic actuator (48) has a movable plunger piston (52), and **in that**, if a current is applied to the coil (50), the plunger piston (52) can be brought into engagement with the pressure plate (32) in such a way that it moves the pressure plate (32) out of engagement with the drive disc (30).

## Revendications

1. Pompe à eau comprenant un embrayage pour un moteur à combustion interne, comprenant :
- un boîtier de pompe (12) avec un arbre de pompe (14) disposé dans celui-ci ;
- une poulie à courroie (20) montée à rotation sur le boîtier de pompe (12), laquelle présente une surface d'engagement d'embrayage radiale (24) ;
- un embrayage (28) pourvu d'un ressort (34), un disque d'entraînement (30) et une plaque de pression mobile (32), le disque d'entraînement (30) étant monté radialement autour de l'arbre de pompe (14) et étant disposé axialement entre la surface d'engagement d'embrayage (24) et la plaque de pression (32), la plaque de pression (32) étant montée radialement autour de l'arbre de pompe (14) et étant positionnée axialement à côté du disque d'entraînement (30), le ressort (34, 84, 146) étant disposé radialement autour de l'arbre de pompe (14) et précontraignant mutuellement par engagement par friction la plaque de pression (32), le disque d'entraînement (30, 80, 140, 142) et la surface d'engagement d'embrayage (24) ;
- un dispositif d'actionnement (48) pour déplacer la plaque de pression (32) hors d'engagement avec le disque d'entraînement (30) et pour libérer la poulie à courroie (20) de l'arbre de pompe (14), le dispositif d'actionnement étant un actionneur électromagnétique (48) qui présente une bobine (50),
- **caractérisée en ce que** l'actionneur électromagnétique (48) présente un piston plongeur (52) mobile et **en ce que** dans le cas d'une alimentation en courant de la bobine (50), le piston plongeur (52) peut être amené en prise avec la plaque de pression (32) de telle sorte qu'il déplace la plaque de pression (32) hors d'engagement avec le disque d'entraînement (30).
